# EUROPEAN PATENT SPECIFICATION

(11) **EP 2 848 943 B1**
(45) Date of publication and mention of the grant of the patent: **20.04.2016**
(21) Application number: 14185237.6
(22) Date of filing: 17.09.2014
(51) Int. Cl.: G01N 35/00, G01N 35/04, B03C 1/28

(54) **Molecular extraction robot with loading device for protective sheaths of magnet**
Roboter zur molekularen Extraktion mit Ladevorrichtung für Magnetschutzhüllen
Robot pour extraction moleculaire avec un dispositif pour charger des housses protectrice pour des aimants

(30) Priority: 17.09.2013 IT TO20130756
(43) Date of publication of application: 18.03.2015
(73) Proprietor: MASMEC S.p.A., Modugno (IT)
(72) Inventor: Vinci, Angelo Michele, 70026 MODUGNO (IT); Larizza, Pietro, 70026 MODUGNO (IT)
(74) Representative: Bongiovanni, Simone

(56) References cited:
- US-A1- 2002 123 156
- US-A1- 2009 176 308
- US-A1- 2010 288 705
- US-B2- 7 927 495

## Description

The present invention relates to a robot for loading and moving covers that may be used in a molecule extraction process, i.e. DNA.

As is known, the extraction of nucleic acids is the first step in the applications of molecular biology.

To proceed with the extraction of a nucleic acid from a sample (entire organ, tissue, cell culture, blood, biological liquid, etc.), initially the cell membranes of the cells of the sample are broken down (lysis). The lysis can be performed using different techniques, for example by mechanically destroying the cell membrane (hypotonic lysis), by destroying the cell membrane by means of enzymes or by destroying the cell membrane via chemical treatment (lysis with detergents).

Detergents promote breakdown of the cell membrane and dissociate the proteins from the nucleic acids.

Following breakdown of the cell walls and the membrane, a complex mixture is obtained consisting, for example, of nucleic acids (DNA, RNA), lipids, mono and polysaccharides, proteins and salts.

Removal of the proteins from the mixture is particularly important as they can degrade the nucleic acids or bind with the nucleic acids, preventing the subsequent steps of the process which entail purification and separation of the nucleic acids from the mixture.

According to a recent technology, the process of extraction of the nucleic acids can be performed using micro-beads (microparticles) adapted to directly absorb DNA fragments from the solution containing the cells subject to lysis.

The micro-beads are released into the solution so that the nucleic acid molecules deposit on their surface and are subsequently picked up using a permanent magnet since the micro-beads are made of a material which is magnetically attracted.

In further detail, the permanent magnet is covered by a disposable tubular cover which is immersed in the solution containing the micro-beads so that they are attracted and deposit on the surface of the cover.

Subsequently the cover and the permanent magnet housed in it are extracted from the container containing the mixture so as to remove the micro-beads. The micro-beads are normally washed to eliminate contaminants and salts in which the cover and the permanent magnet are arranged inside a container provided with a washing solution.

At the end of these washing operations, the permanent magnet is extracted from the cover, allowing release of the micro-beads on which the DNA fragments are present.

US2010/0288705 A1 and US7927495 B2 disclose such robotic prior art devices for parallel magnetic extraction of bio-particles.

The object of the present invention is to provide a device for loading and moving covers that may be used in a molecule extraction process, i.e. DNA.

The preceding object is achieved by the present invention since it relates to a robotic device according to claim 1.

In particular, the permanent magnet has a polarization direction transversal to the axis of the elongated element so that the opposite poles of the magnet (N,S) arrange themselves on diametrically opposite faces of the elongated element.

**The invention will be illustrated with particular reference to the attached figures** which show a preferred non-limiting embodiment thereof in which:
- figure 1 illustrates, in a perspective view, a robot for the extraction of DNA obtained according to the precepts of the present invention;
- figures 2 and 3 illustrate, in a perspective view and on an enlarged scale, a detail of the device of figure 1;
- figures 4 and 5 illustrate in a frontal view and partially in section the detail illustrated in figures 2 and 3;
- figures 6-15 illustrate operating steps of the device of figure 1.

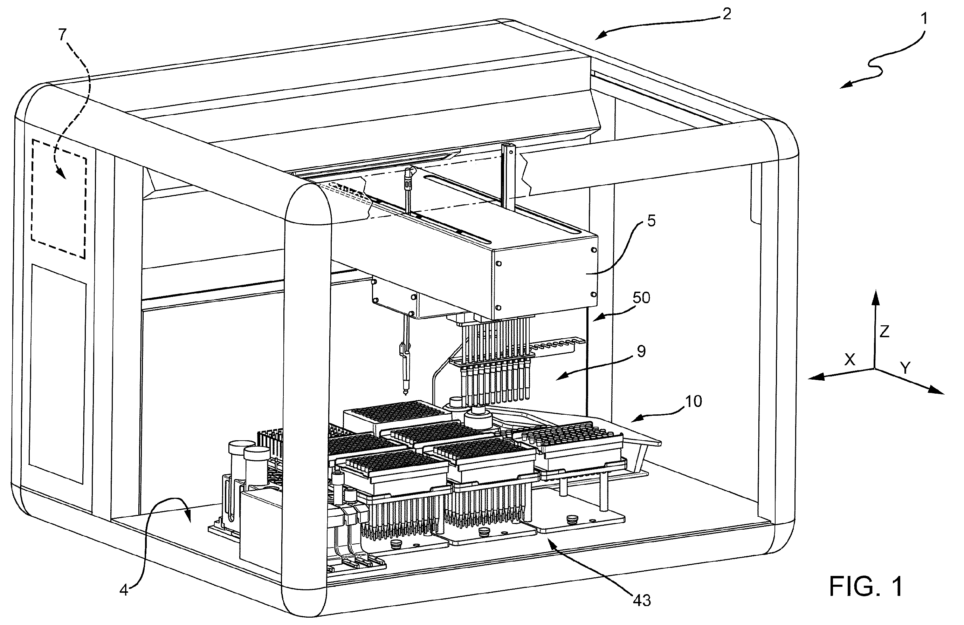

**In** **figure 1** **the number 1 indicates,** as a whole, a robot for loading and moving covers that may be used in a molecule extraction process, i.e. DNA.

The device 1 comprises a support structure 2 defining a rectangular support surface 4 accessible frontally and laterally from the outside of the support structure 2.

The device 1 furthermore comprises a head 5 moving along three Cartesian axes X,Y and Z in a parallelepipedal three-dimensional space within the support structure 2 with respect to the rectangular support surface 4. The head 5 moves under the thrust of actuators (not illustrated for the sake of simplicity) controlled by an electronic unit 7 for carrying out a plurality of operations which will be illustrated below.

The device 1 comprises a gripping and transport structure 9 carried by the head 5 adapted to pick up / use / unload a plurality of disposable covers 10 made of plastic material. The covers, of commercial type, do not form the subject of the present invention.

In particular, during a work cycle, the disposable covers 10 are picked up and coupled with the gripping and transport structure 9 to cover parts of the latter so that the robot can carry out the work cycle - the covers 10 are then transported and released at the end of the work cycle by the gripping and transport structure 9.

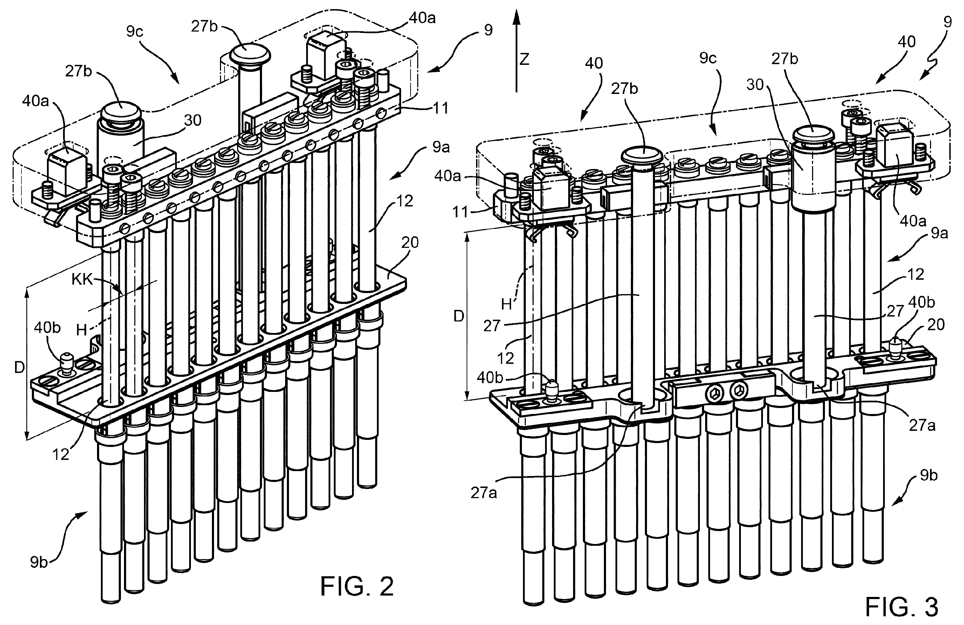

The gripping and transport structure 9 comprises a first upper **structure** 9a directly carried by the head 5 and a second lower **structure** 9b movable with respect to the first upper **structure** 9a along a guide 9c interposed between the structures 9a and 9b. The guide 9c allows sliding of the lower **structure** 9b with respect to the upper one 9a in a vertical direction z between a first travel end position (figures 2 and 3) in which the first **structure** 9a is next to the second **structure** 9b and a second travel end position in which the lower **structure** 9b is spaced apart from the upper **structure** 9a by a predetermined distance D.

In further detail, the first **structure** 9a comprises a first elongated flat rectangular wall 11 which carries a plurality of elongated cylindrical elements 12 arranged with axes H perpendicular to the plane on which the flat wall 11 lies; the axes H of the elongated elements 12 lie on the same vertical plane so that the cylindrical elongated elements 12 form an array of elongated elements equally spaced from one another along the wall 11 with centre-to-centre distance KK.

The cylindrical elongated elements 12 have the same length L and are made of non-magnetic metal material, typically aluminium.

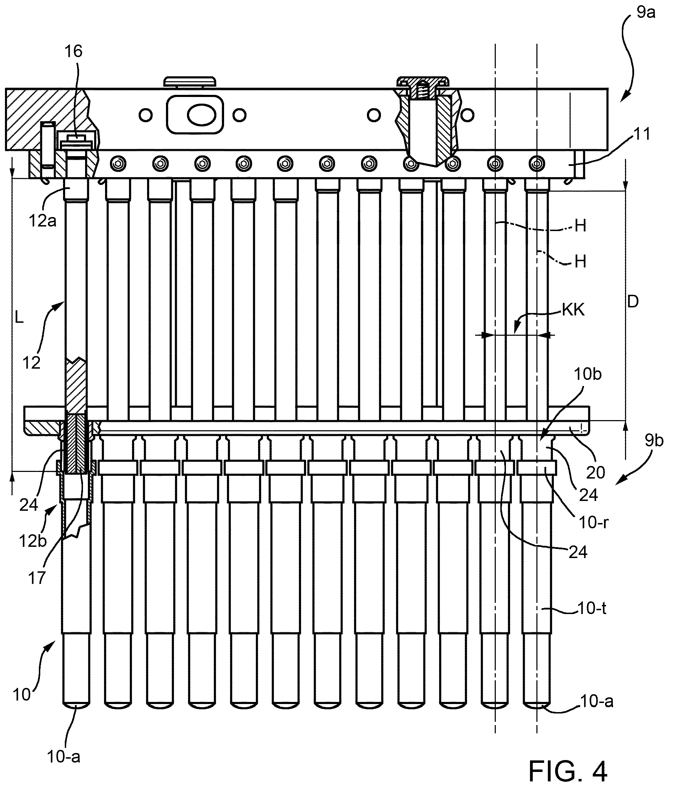

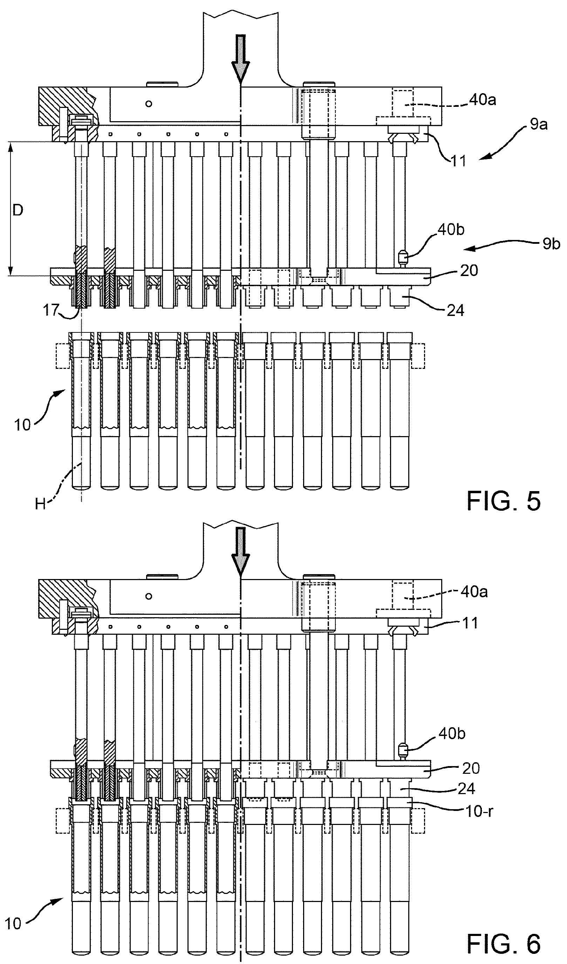

Each cylindrical elongated element 12 has a first upper end portion 12-a firmly fixed (for example by means of through screws 16 passing through the wall 11) to the wall 11 and a second lower end portion 12-b provided with an axial seat which houses a cylindrical permanent magnet 17 (see figures 4 and 5). The rectangular wall 11 is also made of non-magnetic material, for example aluminium.

In further detail, the permanent magnet has a polarisation direction transversal to the axis H of the elongated element 12 so that the opposite poles of the magnet (N,S) arrange themselves on the two lateral portions, i.e. the diametrically opposite faces of the elongated element 12.

The second lower **structure** 9b comprises a flat elongated rectangular wall 20 (the wall 20 has substantially the same length as the wall 11 and is only slightly wider than the latter) provided with a plurality of through tubular elements 24 which extend from the same side of the rectangular wall 20 along an edge of a major side of the rectangular wall 20.

Each tubular element 24 has an axis coaxial with the axis H of a respective cylindrical elongated element 12 so that-thanks to the reciprocal arrangement of lower and upper structure - each cylindrical elongated element 12 is coupled with a through tubular element 24 through which it can slide. The diameter of the through tubular element 24 is larger than the diameter of the cylindrical elongated element 12.

The guide 9c is composed of a pair of shafts 27 parallel to each other which each have a first lower end portion 27a (see figure 3) firmly fixed to the rectangular wall 20 and a second widened upper end portion 27b adapted to abut on a bush 30 inside which the shaft 27 can slide. The bushes 30 are carried by the wall 11 and face upwards; in this way the movement of the wall 20 with respect to the wall 11 is possible thanks to the sliding of the shafts 27 in the respective bushes 30.

In greater detail, in the area of the second travel end position (figure 3), the end portions 27b abut on the bushes ensuring the spacing of the upper **structure** 9a with respect to the lower structure 9b according to said predetermined distance D.

In the area of the first travel end position, the walls 20 and 11 are facing and the shafts 27 project upwards from the bushes 30.

Each disposable cover 10 comprises a cylindrical tube 10-t (made of plastic material) closed at a first end 10-a and defining at a second end thereof 10-b a circular opening surrounded by a cylindrical annular edge 10-r. Each disposable cover 10 has a diameter such as to house an elongated element 12 arranged with its axis H coaxial with the axis of the disposable cover 10 so that the elongated element 12 is spaced with respect to the inner walls of the cover 10.

The cover 10 furthermore has a length greater than L. In this way each disposable cover 10 is shaped so as to contain a respective elongated element 12 arranged with its axis H coaxial with the axis of the cylindrical tube 10-t.

As will be detailed below, each tubular element 24 is shaped to couple with interference with a free end portion of a respective disposable cover 10.

In this way the covers 10 are arranged, in use when coupled to the second portion 9b, with their axes parallel to one another and coplanar to a vertical plane so as to form an array of covers carried by the second portion 9b.

According to the present invention, a quick coupling/release device 40 is provided interposed between the first upper **structure** 9a and the second lower **structure** 9b.

The quick coupling/release device 40 - according to the embodiment example illustrated - comprises two units arranged at the end of the walls 11/20; each unit comprises a first member 40-a carried by the wall 11 and a second member 40-b carried by the wall 20

The first and second members 40-a, 40-b - of known type - are adapted to snap-couple to each other when they are pressed against each other, i.e. when the first upper **structure** 9a is pushed towards the second lower **structure** 9b. Following the snap coupling, the walls 11 and 10 are maintained connected next to each other. Following a further pressure of the first upper **structure** 9a towards the second lower **structure** 9b, the first and second members 40-a, 40-b are released from each other.

**In use,** at the beginning of a work cycle (figure 3), the lower **structure** 9b is arranged in the second travel end position in which the lower **structure** 9b is spaced apart from the upper **structure** 9a by the predetermined distance D. The walls 11 and 20 are therefore spaced apart by the distance D.

The head 5 moves along x and y under the control of the electronic unit 7 until it arranges itself above a plurality of support elements arranged on the support surface 4 (typically carried by housing holders 43 of known type which arrange the housings according to a matrix structure).

The positioning of the control unit 7 allows each element 12 to be arranged with its axis coaxial with the axis of a respective disposable cover 10; at said point the movement of the head along x, y terminates and it is lowered along z (figure 6).

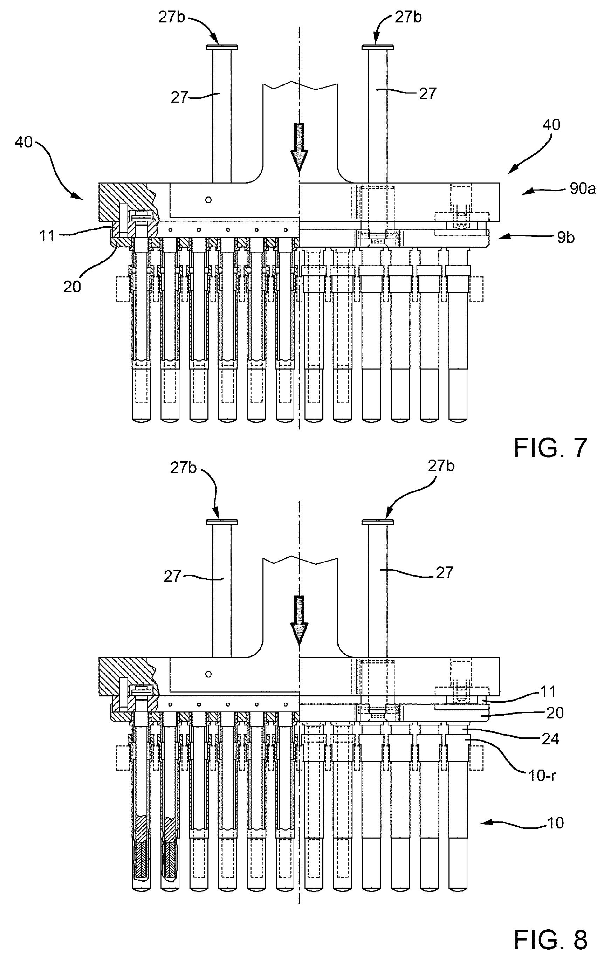

The lowering of the head 5 carries out in sequence:
a) entry of the tubular elements 24 into the respective covers 10 (figure 6) for a first stretch f1 - the coupling between the tubular elements 24 prevents the wall 10 from further lowering itself, whereas the wall 11 continues to lower itself (the shafts 27 run in the bushes 30) and move nearer to the wall 20 resting on the covers 10;
b) arrangement of the wall 11 in contact with the wall 20 and **consequent closing** of the quick release/coupling device 40 due to the pressure exerted by the wall 11 on the wall 20 (figure 7);
c) following the firm coupling between the two walls 11 and 20, the tubular elements 24 penetrate further (see figure 8) into the respective covers 10 for a second stretch f2 above the stretch f1 ensuring a firm coupling between the second lower portion 9b and the disposable covers.

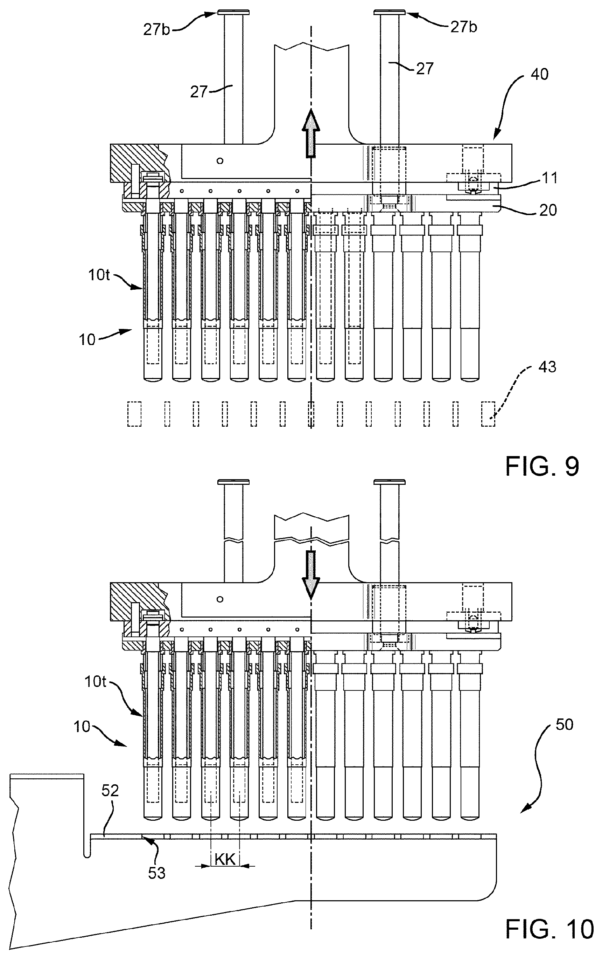

The head 5 is subsequently raised (figure 9 movement along z) to pick up the covers 10 from the housing holders 43 and subsequently moved to carry out the DNA extraction operations according to techniques known in literature and therefore mentioned only briefly.

Said operations can comprise:
a) lysis of the cells by means of reagent - the lysis is performed in a plurality of wells (12 samples: 1 sample/patient);
b)insertion in each well of the magnetic micro-beads coated in material adapted to absorb the DNA;
c) withdrawal of the covers 10 on the basis of the above operations;
d)insertion into the well of the permanent magnet 17 covered by the cover 10 so that the magnetic micro-beads are deposited on the outer surface of the cover 10;
e) extraction of the cover 10 from the well and insertion into a well containing a washing fluid - the cover is moved by an alternating motion inside the well containing washing fluid;
g) elution of the DNA.

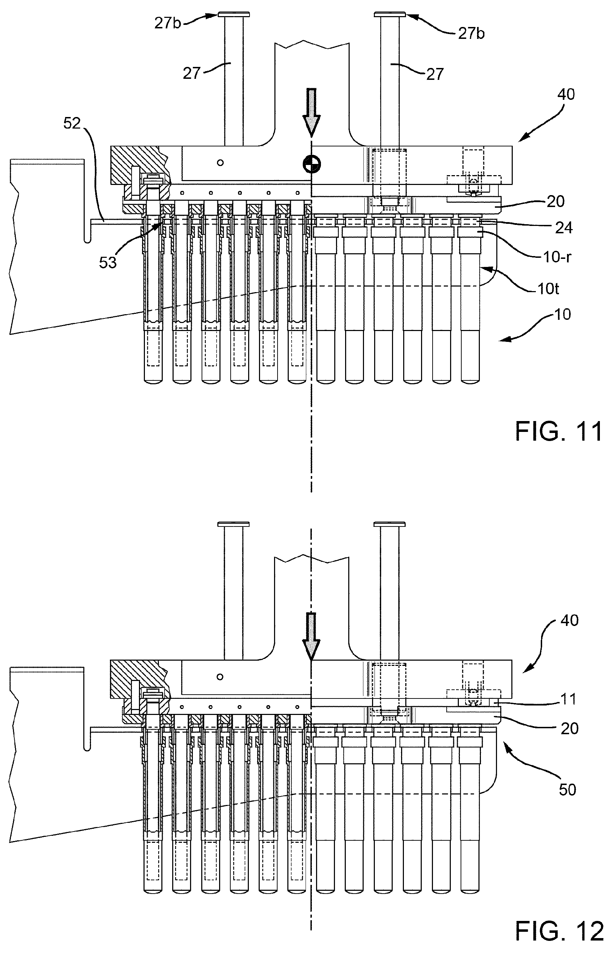

To release the covers 10 from the **gripping and transport structure 9,** a tool 50 is used (figures 1 and 11) carried by a vertical wall of the support structure 2.

The tool 50 comprises an elongated flat rectangular wall 52 provided with a plurality of openings 53 which open along a major side of the flat elongated wall 52. The openings 53 are approximately circular in shape and have axes spaced apart from one another by a distance equal to the centre-to-centre distance KK; the diameter of said openings 53 is equal to the external diameter of the tube 10-t but is smaller than the external diameter of the cylindrical annular edge of the cover 10.

To carry out the release operations, the head 5 moves under the control of the electronic unit 7 arranging (figure 11) the portion of the tubular elements 24 not covered by the tube 10-t inside a respective opening 53; in this way, an upper face of the wall 52 faces the wall 20 while the cylindrical annular edges 10-r of the covers 10 face a lower face of the wall 52.

Subsequently the head 5 is further lowered (figure 12) for a stretch creating a pressure of the wall 11 on the wall 20 which rests on the tool 50; said operation contributes **to the opening** of the quick release/coupling device 40.

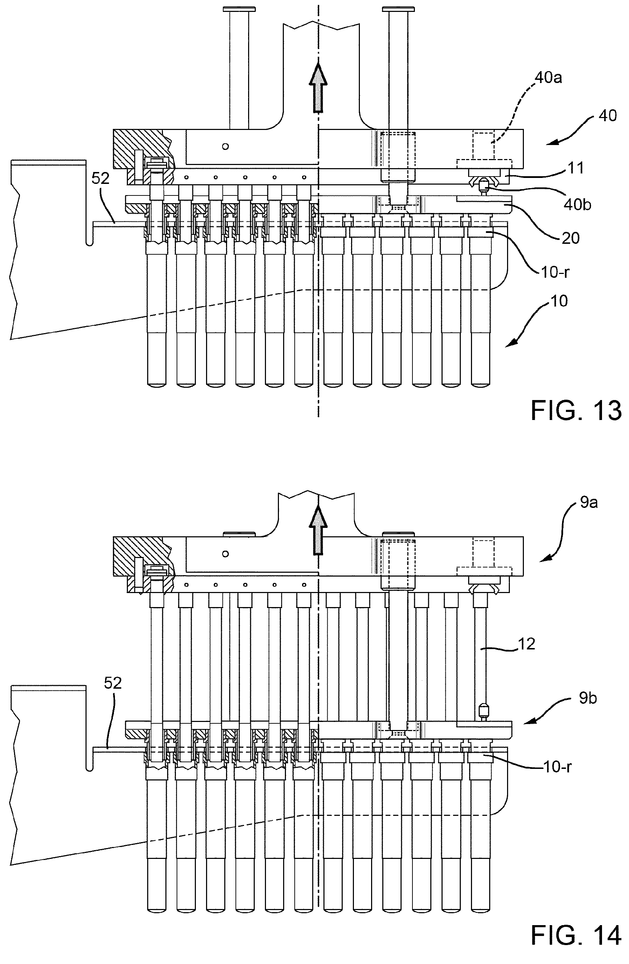

The head is raised so that the wall 11 (figure 13) moves away from the wall 20 which is weakly coupled to the tool 50 due to the interference exerted by the cylindrical annular edges of the covers 10 on the lower face of the wall 52.

When the wall 11 reaches with respect to the wall 20 the travel end position in which the lower portion 9b is spaced with respect to the upper portion 9a by a predetermined distance D, the cylindrical annular edges 10-r of the covers 10 abut on the lower face of the wall 52 (figure 14).

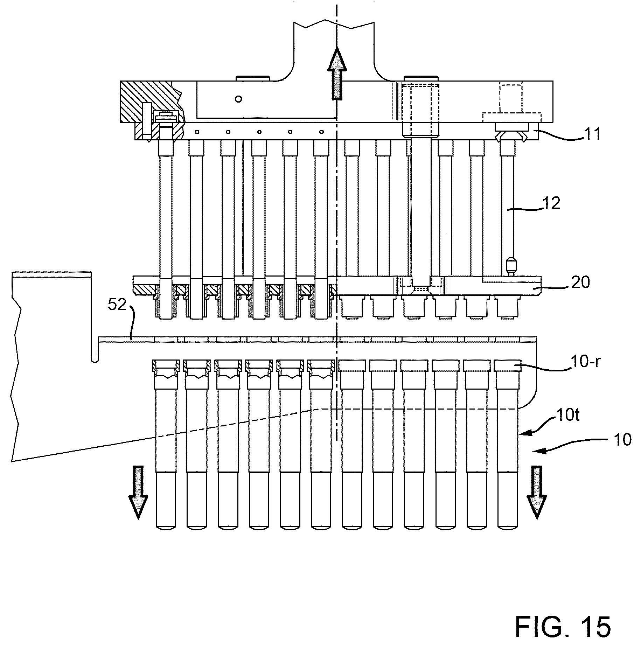

A subsequent travel upwards of the head (figure 15) causes the tubes 10-t to come out of the tubular elements 24 allowing release by gravity of the disposable covers 10.

The gripping and transport structure 9 then returns to the arrangement it had at the beginning of the work cycle. The operations previously illustrated can then be repeated to load the next batch of covers 10.

## Claims

1. A robotic device for loading and moving covers that may be used in a process for extracting molecules, in particular DNA, comprising:
- a head (5) moving in a three-dimensional space with respect to a support surface (4) of the device under the thrust of actuators controlled by an electronic unit (7);
- a gripping and transport structure (9) carried by the head (5) adapted to pick up/use/unload a plurality of disposable covers (10), each comprising a tubular element (10-t) closed at a first end (10-a) and defining at a second end (10-b) thereof a circular opening surrounded by a cylindrical annular edge (10-r), whereby the gripping and transport structure (9) comprises a first upper structure (9a) directly carried by the head (5) and a second lower structure (9b) movable with respect to the first upper structure (9a) along a vertical guide (9c) interposed between the first structure and the second structure (9a, 9b) between a first travel end position in which the first structure (9a) is next to the second structure (9b) and a second travel end position in which the lower structure (9b) is spaced apart from the upper structure (9a) by a predetermined distance D;
- a plurality of elongated elements (12) carried by the upper structure (9a) arranged with first axes parallel and coplanar to one another so as to form an array of elongated elements spaced apart from one another by a center-to-center distance KK; each elongated element carrying a respective magnetic element at a free end thereof;
- a plurality of connecting walls (24) carried by the lower structure (9b) and each adapted to be coupled to a respective tubular element (10-t);
**characterized in that** the robotic device further comprises:
- quick coupling/release means (40) interposed between the first upper structure (9a) and the second lower structure (9b);
said robotic device being adapted to carry out a first step of positioning said head (5) with respect to said covers such that the first and second structures are approaching each other up to closing the quick coupling/release means (40) and such that the coupling of the second end portion of each tubular element (10-t) to a respective connecting wall (24) and the inlet of each elongated element within a respective cover is obtained.

2. A device according to claim 1, wherein said robotic device is adapted to carry out, upon closing said quick coupling/release means, a further travel of the first and second structures (9a, 9b) coupled to each other towards the covers (10) in order to obtain a further firmer coupling of the connecting walls (24) to the respective covers (10).

3. A device according to claim 1 or 2, wherein each connecting wall (24) comprises a through tubular wall which extends through a wall (20) of the lower structure (9b); said tubular wall being adapted to be coupled with interference to the end portion of a respective tubular element (10-t); said first and second structures (9a, 9b) being configured and mutually arranged so that each elongated element (12) engages a tubular wall for penetrating into a respective cover during said first step.

4. A device according to one of the preceding claims, wherein said guide (9c) comprises a pair of rectilinear elements (27) which have first ends (27a) firmly connected to the second lower structure (9b), engage bushes (30) carried by the first structure (9a) and have second end portions (27b) adapted to abut on said bushes (30) at said second travel end position.

5. A device according to any one of the preceding claims, wherein said elongated elements (12) all have the same length (L) .

6. A device according to any one of the preceding claims, wherein said elongated elements (12) are cylindrical in shape.

7. A device according to any one of the preceding claims, wherein said elongated elements (12) are made of non magnetic metal material, typically aluminum.

8. A device according to any one of the preceding claims, wherein the permanent magnet has a polarization direction transversal to the axis of the elongated element (12) so that the opposite poles of the magnet (N, S) arrange themselves on diametrically opposite faces of the elongated element (12).

9. A device according to any one of the preceding claims, wherein an unloading tool (50) is provided, carried by a wall of a support structure (2) and comprising an elongated wall (52) provided with a plurality of release openings (53) which open up along a major side of the elongated wall (52); said release openings have axes mutually spaced apart by a distance equal to the center-to-center distance KK; the diameter of said release openings (53) being smaller than the outer diameter of the cylindrical annular edge of the cover (10); said electronic unit (7) being configured for moving said head and arranging the portion of the connecting walls not coupled to a respective tubular element into a respective release opening (53) so that an upper face of the elongated wall (52) faces the lower structure (9b) while the annular edges (10-r) of the covers (10) face a lower face of the elongated wall (52); said electronic unit (7) being configured:
- to move the head (5) towards said unloading tool (50) for obtaining the opening of the quick coupling/release device (40), and then
- to move the head (5) away from the unloading tool so that the first and second structures move away from the unloading tool and the annular edges (10-r) of the covers (10) abut on said lower face and the covers (19) release from the connecting walls and are released by gravity from the gripping and transport structure.

10. A system comprising a robotic device according to any one of the preceding claims, wherein said quick coupling/release means (40) comprise a first member (40a) carried by a first support element (11) of the first upper structure (9a) and a second member (40b) carried by a second support element (20) of the second lower structure (9b) and adapted to be snap-coupled to the first member (40a) when the first support element (11) is moved close to and pressed onto the second support element (20); following the snap coupling, the application of a pressure to the first support element (11) causing the release of the first and second members (40a, 40b).

## Patentansprüche

1. Robotervorrichtung zum Laden und Bewegen von Hüllen, die man in einem Verfahren zum Extrahieren von Molekülen, insbesondere DNA, verwenden kann, aufweisend:
- einen Kopf (5), der sich in einem dreidimensionalen Raum bezüglich einer Auflagefläche (4) der Vorrichtung mit der Kraft von Antrieben, welche durch eine elektronische Einheit (7) gesteuert werden, bewegt;
- eine Greif- und Transportstruktur (9), die vom Kopf (5) getragen wird, geeignet zum Aufgreifen/Verwenden/Entladen einer Mehrzahl von Einweghüllen (10), von denen jede ein röhrenförmiges Element (10-t) aufweist, welches an einem ersten Ende (10-a) geschlossen ist und an einem zweiten Ende (10-b) eine ringförmige Öffnung definiert, die von einem zylindrischen Ringrand (10-r) umgeben ist, wobei die Greif- und Transportstruktur (9) eine erste obere Struktur (9a) aufweist, welche direkt vom Kopf (5) getragen wird, und eine zweite untere Struktur (9b), die bezüglich der ersten oberen Struktur (9) längs einer vertikalen Führung (9c), welche zwischen die erste Struktur und die zweite Struktur (9a, 9b) eingefügt ist, beweglich ist zwischen einer ersten Laufendposition, in welcher die erste Struktur (9a) der zweiten Struktur (9b) am nächsten ist, und einer zweiten Laufendposition, in welcher die untere Struktur (9b) von der oberen Struktur (9a) durch einen vorbestimmten Abstand D beabstandet ist;
- eine Mehrzahl von Längselementen (12), die von der oberen Struktur (9a) getragen werden, welche so angeordnet sind, dass erste Achsen parallel und coplanar zueinander sind, so dass sie eine Anordnung von Längselementen bilden, die durch einen Mitte-zu-Mitte Abstand KK voneinander beabstandet sind; wobei jedes Längselement ein entsprechendes magnetisches Element an einem freien Ende trägt;
- eine Mehrzahl von Verbindungswänden (24), welche von der unteren Struktur (9b) getragen werden, und jeweils so angeordnet sind, um mit einem entsprechenden röhrenförmigen Element (10-t) gekoppelt zu werden;
**dadurch gekennzeichnet dass** die Robotervorrichtung weiterhin aufweist:
- Schnell- kopplungs-/loslass- mittel (40), welche zwischen der ersten oberen Struktur (9a) und der zweiten unteren Struktur (9b) angeordnet sind; welche den Kopf (5) bezüglich der Hüllen so positionieren, dass die ersten und zweiten Strukturen sich einander bis zum Schließen der Schnell- kopplungs-/loslass- mittel (40) nähern und dass die Kopplung des zweiten Endteils jedes röhrenförmigen Elementes (10-t) an eine entsprechende Verbindungswand (24) und der Eintritt eines jeden Längselementes in eine entsprechende Hülle erhalten wird.

2. Vorrichtung nach Anspruch 1, wobei die Robotervorrichtung angepasst ist beim Schließen der Schnell- kopplungs-/loslass- mittel ein en weiteren Laufweg der ersten und zweiten Strukturen (9a, 9b) miteinander gekoppelten in Richtung der Hüllen (10) auszuführen, um eine weitere festere Kopplung der Verbindungswände (24) an die entsprechenden Hüllen (10) zu erhalten.

3. Vorrichtung nach Anspruch 1 oder 2, wobei jede Verbindungswand (24) eine Durchgangsröhrenwand aufweist, welche sich durch eine Wand (20) der unteren Struktur (9b) erstreckt; wobei die röhrenförmige Wand angepasst ist um unter Überlagerung mit dem Endteil des entsprechenden röhrenförmigen Elements (10-t) gekoppelt zu werden;
wobei erste und zweite Strukturen (9a, 9b) konfiguriert werden und gegenseitig angeordnet werden, so dass jedes Längselement (12) in eine röhrenförmige Wand eingereift um während des ersten Schrittes in eine entsprechende Hülle einzudringen.

4. Vorrichtung nach einem der vorhergehenden Ansprüche, wobei die Führung (9c) ein Paar von gradlinigen Elementen (27) umfasst, welche erste Enden (27a) haben, die fest mit der zweiten unteren Struktur (9b) verbunden sind, Eingreifhülsen (30), die von der ersten Struktur (9a) getragen werden, und zweite Endabschnitte (27b) haben, die dazu angepasst sind auf den Hülsen (30) in der zweiten Laufwegendposition anzuliegen.

5. Vorrichtung nach einem der vorhergehenden Ansprüche, wobei die Längselemente (12) alle dieselbe Länge (L) haben.

6. Vorrichtung nach einem der vorhergehenden Ansprüche, wobei die Längselemente (12) alle zylindrische Form haben.

7. Vorrichtung nach einem der vorhergehenden Ansprüche, wobei die Längselemente (12) aus nicht-magnetischem Metallmaterial bestehen, typischerweise Aluminium.

8. Vorrichtung nach einem der vorhergehenden Ansprüche, wobei der Permanentmagnet eine Polarisationsrichtung transversal zur Achse der Längselemente (12) hat, so dass die entgegengesetzten Pole des Magnets (N, S) sich selbst auf diametral entgegengesetzten Flächen des Längselementes (12) anordnen.

9. Vorrichtung nach einem der vorhergehenden Ansprüche, wobei ein Entladewerkzeug (50) vorgesehen ist, das von einer Wand einer Auflagestruktur (2) getragen wird und das eine längliche Wand (52) aufweist, welche mit einer Mehrzahl von Loslassöffnungen (53) ausgestattet ist, welche sich längs einer Hauptseite der Längswand (52) öffnen; wobei die Loslassöffnungen Achsen haben, die voneinander durch einen Abstand beabstandet sind, der gleich ist dem Mitte-zu-Mitte Abstand KK; wobei der Durchmesser der Abgabeöffnung (53) kleiner ist als der Außendurchmesser des zylindrischen Ringrandes der Hüllen (10);
wobei die elektronische Einheit (7) zum Bewegen des Kopfes konfiguriert ist und zum Anordnen des Abschnitts der Verbindungswände, die nicht mit einem entsprechenden röhrenförmigen Element gekoppelt sind, in eine entsprechende Loslassöffnung (53), so dass eine Oberseite der Längswand (52) der unteren Struktur (9b) gegenüberliegt, während die ringförmigen Ränder (10-r) der Hüllen (10) einer Unterseite der Längswand (52) gegenüberliegen;
wobei die elektronische Einheit (7)
- zur Bewegung des Kopfes (5) in Richtung des Entladewerkzeugs (50) um die Öffnung der Schnellkopplungs/Löseeinrichtung (40) zu erhalten, und dann
- zur Bewegung des Kopfes (5) weg vom Entladewerkzeug konfiguriert ist, so dass die ersten und zweiten Strukturen sich vom Entladewerkzeug wegbewegen und die ringförmigen Ränder (10-r) der Hüllen (10) auf der Unterseite anliegen und die Hüllen (19) sich von den Verbindungswänden loslösen und durch Gravitation von der Greif- und Transportstruktur gelöst werden.

10. Ein System aufweisend eine Robotereinuchtung nach einem der vorhergehenden Ansprüche, wobei die Schnell- kopplungs-/loslass- mittel (40) ein erstes Element (40a) getragen von einem ersten Auflageelement (11) der ersten oberen Struktur (9a) und ein zweites Element (40b) getragen von einem zweiten Auflageelement (20) der zweiten unteren Struktur (9b) aufweisen und so angepasst sind, dass sie mit dem ersten Element (40a) einrasten, wenn das erste Auflageelement (11) nahe an das zweite Auflageelement (20) bewegt und auf es gepresst wird; im Anschluss an das Einrasten, die Anwendung eines Druckes auf das erste Auflageelement (11), welches das Loslassen der ersten und zweiten Elemente (40a, 40b) verursacht.

## Revendications

1. Un dispositif robotisé pour le chargement et le déplacement d'enveloppes qui peuvent être utilisées dans un procédé pour l'extraction de molécules, en particulier ADN, comprenant :
- une tête (5) se déplaçant dans un espace tridimensionnel par rapport à une surface support (4) du dispositif sous la poussée des actionneurs contrôlés par une unité électronique (7);
- une structure d'accroche et de transport (9) portée par la tête (5) adaptée pour prélever/utiliser/décharger un ensemble d'enveloppe (10), chacune comprenant un élément tubulaire (10-t) fermé à une première extrémité (10-a) et définissant à une seconde extrémité (10-b) de celui-ci une ouverture circulaire entourée par un bord annulaire cylindrique (10-r),
par lequel la structure d'accroche et de transport (9) comprend une première structure supérieure (9a) directement portée par la tête (5) et une seconde structure inférieure (9b) mobile par rapport à la première structure supérieure (9a) le long d'un guide vertical (9c) interposé entre la première structure et la seconde structure (9a, 9b) entre une première position de fin de course dans laquelle la première structure (9a) est à côté de la seconde structure (9b) et une seconde position de fin de course dans laquelle la structure inférieure (9b) est espacée de la structure supérieure (9a) d'une distance prédéterminée D ;
- une pluralité d'éléments allongés (12) portée par la structure supérieure (9a) agencée avec des premiers axes parallèles et coplanaires les uns par rapport aux autres de façon à former une zone d'éléments allongés espacés les uns des autres par une distance prise de centre à centre KK; chaque élément allongé portant un élément magnétique respectif à une extrémité libre de celle-ci ;
- une pluralité de parois de connexion (24) portée par la structure inférieure (9b) et adaptée pour être couplée à un élément tubulaire (10-t) ;
**caractérisée en ce que** le dispositif robotisé comprend de plus :
- des moyens de couplage/découplage rapide (40) interposés entre la première structure supérieure (9a) et la seconde structure inférieure (9b), ledit dispositif robotisé étant adapté pour réaliser une première étape de positionnement de ladite tête (5) par rapport auxdites enveloppes de façon que les première et seconde structures sont approchées l'une de l'autre jusqu'à la fermeture des moyens de couplage/découplage rapide (40) et de façon que le couplage de la seconde partie d'extrémité de chaque élément tubulaire (10-t) à une paroi de connexion respective (24) et l'entrée de chaque élément allongé dans une enveloppe respective soit obtenu.

2. Un dispositif selon la revendication 1, dans lequel ledit dispositif robotisé est adapté pour effectuer, une fois lesdits moyens de couplage/découplage rapides fermés, un déplacement supplémentaire des première et seconde structures (9a, 9b) couplées ensemble vers les enveloppes (10) de façon à obtenir un autre couplage plus ferme des parois de connexion (24) aux enveloppes respectives (10).

3. Un dispositif selon la revendication 1 ou 2, dans lequel chaque paroi de connexion (24) comprend une paroi tubulaire traversante qui s'étend à travers une paroi (20) de la structure inférieure (9b); ladite paroi tubulaire étant adaptée pour être couplée avec interférence avec la partie d'extrémité d'un élément tubulaire respectif (10-t); lesdites première et seconde structure (9a, 9b) étant configurées et mutuellement agencées de façon à ce que chaque élément allongé (12) engage une paroi tubulaire pour pénétrer dans une enveloppe respective durant ladite première étape.

4. Un dispositif selon l'une quelconque des revendications précédentes, dans lequel ledit guide (9c) comprend une paire d'éléments rectilignes (27) qui ont des premières extrémités (27a) fermement connectées à la seconde structure inférieure (9b), engagent des douilles (30) portées par la première structure (9a) et ont des secondes parties extrémités (27b) adaptées pour être contigües auxdites douilles (30) à ladite seconde position de fin de course.

5. Un dispositif selon l'une quelconque des revendications précédentes, dans lequel lesdits éléments allongés (12) ont tous la même longueur (L).

6. Un dispositif selon l'une quelconque des revendications précédentes, dans lequel lesdits éléments allongés (12) sont de forme cylindrique.

7. Un dispositif selon l'une quelconque des revendications précédentes, dans lequel lesdits éléments allongés (12) sont fabriqués en matériau métallique non magnétique, typiquement l'aluminium.

8. Un dispositif selon l'une quelconque des revendications précédentes, dans lequel l'aimant permanent a une direction de polarisation transversale par rapport à l'axe de l'élément allongé (12) de façon à ce que les pôles opposés de l'aimant (N, S) se positionnent eux-mêmes sur les faces opposées diamétralement de l'élément allongé (12).

9. Un dispositif selon l'une quelconque des revendications précédentes, dans lequel un outil de déchargement (50) est fourni, porté par une paroi d'une structure support (2) et comprenant une paroi allongée (52) munie d'une pluralité d'ouvertures de sortie (53) qui s'ouvrent le long d'un côté principal de la paroi allongée (52); lesdites ouvertures de sortie ont des axes mutuellement espacés d'une distance égale à la distance de centre à centre KK; le diamètre desdites ouvertures de sortie (53) étant plus petit que le diamètre extérieur du bord annulaire cylindrique de l'enveloppe (10); ladite unité électronique (7) étant configurée pour déplacer ladite tête et arranger la partie des parois de connexion non couplées à un élément tubulaire respectif dans une ouverture de sortie respective (53) tel qu'une face supérieure de la paroi allongée (52) soit face à la structure inférieure (9b) pendant que le bord annulaire (10-r) des enveloppes (10) est face à une face inférieure de la paroi allongée (52) ;
ladite unité électronique (7) étant configurée :
- pour déplacer la tête (5) vers ledit outil de déchargement (50) pour obtenir l'ouverture des moyens de couplage/découplage rapide (40), et ensuite
- pour déplacer la tête (5) loin de l'outil de déchargement tel que les première et seconde structures se déplacent loin de l'outil de déchargement et des bords annulaires (10-r) des enveloppes (10) contigües à ladite face inférieure et les enveloppes (10) se libèrent des parois de connexion et sont relâchées par gravité de la structure d'accroche et de transport.

10. Un système comprenant un dispositif robotisé selon l'une quelconque des revendications précédentes, dans lequel lesdits moyens de couplage/découplage rapide (40) comprennent un premier membre (40a) porté par un premier élément support (11) de la première structure supérieure (9a) et un second membre (40b) porté par un second élément support (20) de la seconde structure inférieure (9b) et adapté pour être rapidement couplé au premier membre (40a) quand le premier élément support (11) est rapproché et pressé contre le second élément support (20); après le couplage rapide, l'application d'une pression sur le premier élément support (11) provoque la libération des premier et second membres (40a, 40b).
